Europäisches Patentamt

European Patent Office

Office européen des brevets

(11) Publication number : **0 488 570 A2**

(12) **EUROPEAN PATENT APPLICATION**

(21) Application number : **91310670.4**

(22) Date of filing : **20.11.91**

(51) Int. Cl.$^5$ : **G06F 3/023**

(30) Priority : **26.11.90 US 617830**

(43) Date of publication of application :
**03.06.92 Bulletin 92/23**

(84) Designated Contracting States :
**DE FR GB IT**

(71) Applicant : **CADAM INCORPORATED**
**1935 Buena Vista Street**
**Burbank, California 91504 (US)**

(72) Inventor : **Chen, Jerome Cheng-Rom**
**1505 S. Purdue Avenue, Apartment No. 105**
**West Los Angeles, CA 90025 (US)**
Inventor : **Miura, Kazunari**
**8-10-32-23 Okamoto-Higashinada-Ku**
**Kobe, 658 (US)**

(74) Representative : **Bailey, Geoffrey Alan**
**IBM United Kingdom Limited Intellectual**
**Property Department Hursley Park**
**Winchester Hampshire SO21 2JN (GB)**

(54) **Enhanced multidimensional design keyboard.**

(57)    Described herein is an improved apparatus and method for aiding computer applications in processing information on a display via keyboard entries. The invention traps keyboard interrupt signals and determines, based on a particular interrupt signal, which key was pressed. If the key was one of the arrow keys, the PgUp or PgDn key, then, depending on which of a plurality of modes the system is currently in, an appropriate action will be taken. Actions include rotation of the current object on the display, movement of an object, zooming in or zooming out. Thus, instead of making the user wade through a plurality of menus and cursor pointings, pressing a single key accomplishes any one of a set of functions.

Fig.1

Jouve, 18, rue Saint-Denis, 75001 PARIS

The present invention generally relates to improvements in computer aided design (CAD) systems and more particularly to a enhanced keyboard handler for computer display operations.

In certain applications, it is important to be able to communicate information via a keyboard to a computer application. With the advent of the personal computer this capability became increasingly important. Many companies were founded that specialized in keyboard design and alternatives to keyboards were developed. Some of these alternatives included cursor placement devices such as a mouse, joystick and trackball. However, any application that required text entry still required a keyboard.

Ingenious hybrid keyboard devices were developed such as that found in US Patent 4,527,149, <u>Data display keyboard with angular positioning</u>. This patent discloses an ergonomic keyboard with different angular settings to adjust to the unique needs of a particular operator.

Advances were also made by exploiting the arrow arrow keys on the keyboard to assist in positioning a cursor. One such advance is described in an IBM Technical Disclosure Bulletin (TDB) published on pages 458-459 of the January, 1989 volume, <u>Control of Speed of Cursor Movement</u>. The technique disclosed in the TDB adjusted the movement of a cursor in response to pressing an arrow key based on the current resolution of the display terminal.

In another IBM TDB published on page 840 of the July, 1985 volume, <u>Method for Defining Valid CURSOR Types</u>, the inventor discloses a method for controlling cursor types in an integrated environment where special cursors exist. Various geometric entities are associated with different types of data. The editor displays the appropriate cursor based on the current data type being edited. This technique further enhances the user's interface for computer applications.

Computer applications have become increasingly complex. Computer Aided Design applications are prime examples. Functions such as rotation of solid objects to provide a user with various inspections, movement of objects on the display and positioning a cursor are all combined into a single application. Depending on what mode the system is in, each of these capabilities must be accomplished by a single key-board. Because of the increased functionality of advanced technology in computer applications, a new keyboard apparatus and method is necessary.

In accordance with the present invention, there is now provided apparatus for performing a set of display operations to manipulate information on a display, comprising:

(a) means for transmitting a control signal to a processor in response to a key depression on a keyboard;

(b) processor means for receiving the control signal;

(c) processor means for translating thne control signal into a determination that a partirular key was pressed;

(d) processor means for determining that a particular set of display operations are active by querying a memory location; and

(e) processor means for performing a particular display operation in the particular set of display operations based on the particular key that is pressed and the particular set of display operations that are active.

The present invention thus advantageously provides an improved apparatus and method for aiding competer applications in its usage of a keyboard.

Viewing a second aspect of the present invention, there is now provided a method for performing a set of display operations to manipulate information on a display, comprising the steps of:

(a) transmitting a control signal to a processor in response to a key depression on a keyboard;

(b) receiving the control signal;

(c) translating the control signal into a determination that a particular key was pressed;

(d) determining that a particular set of display operations are active by querying a memory location; and

(e) performing a particular display operation in the particular set of display operations based on the particular key that is pressed and the particular set of display operations that are active.

A preferred embodiment of the present invention traps a keyboard interrupt signal and determines, based on the interrupt signal, which key was pressed. If the key was one of the arrow keys, or the PgUp or PgDn key, then, depending on which of a plurality of modes the system is currently in, an appropriate action will be taken. Actions include rotation of the current object on the display, movement of an object, zooming the display in or zooming out. Thus, instead of making the user wade through a plurality of menus and cursor pointings, pressing a single key accomplishes any of a set of functions.

A preferred embodiment of the present invention will now be described with reference to the accompanying drawings in which:

Figure **1** is a block diagram of a computer in accordance with the present invention;

Figure **2** is a block diagram of a computer keyboard in accordance with the present invention;

Figure **3** is a block diagram of function keys and their corresponding functions in accordance with the present invention;

Figure **4** is a block diagram of keys and their corresponding functions in accordance with the present invention;

Figure **5** is a flow diagram of the control logic in accordance with the present invention;

Figure **6** is a flow diagram of the control logic in accordance with the present invention;

Figure **7** is an illustration of a display in accordance with the present invention;

Figure **8** is an illustration of a rotated object on a display in accordance with the present invention; and

Figure **9** is an illustration of a moved object on a display in accordance with the present invention.

## DETAILED DESCRIPTION OF THE INVENTION

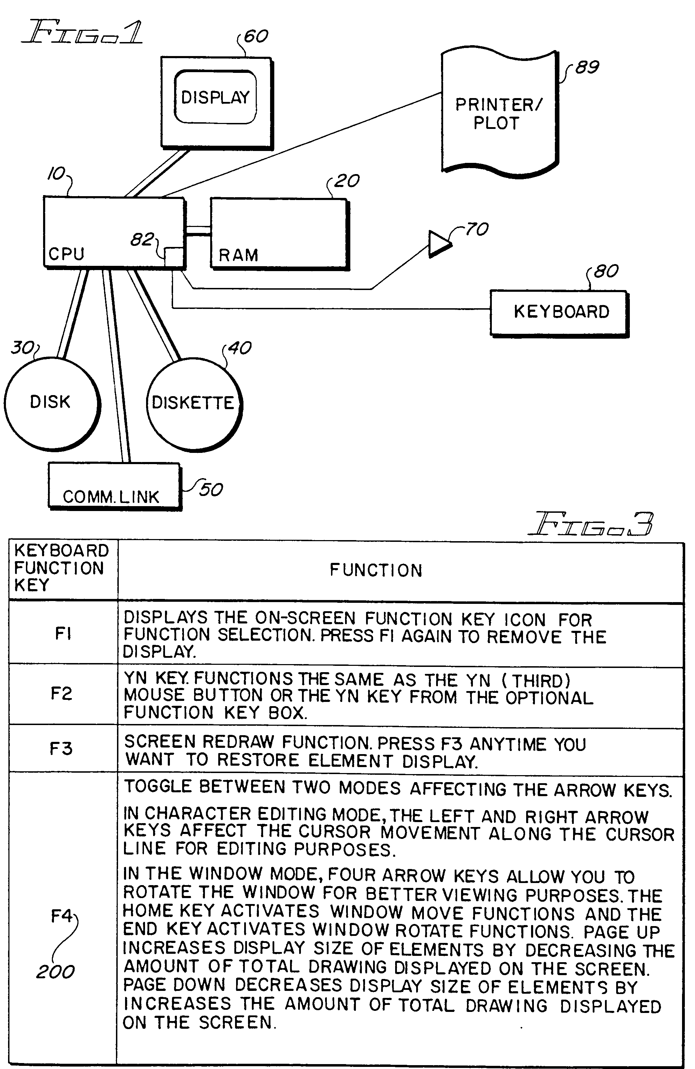

With reference to Figure **1**, the apparatus of the subject invention is a standard microprocessor such as that marketed by IBM under the product name of PS/2. The CPU **10** can be an 80386 or 80486 processor for example. The CPU **10** has Direct Memory Access (DMA) to the RAM **20**, Disk **30** and Diskette **40**. The CPU **10** can also transmit information via the Communication Link **50**. The CPU **10** also communicates to an attached graphic display to display information in EGA, VGA or other higher resolution modes. A mouse **70** is an optional cursor pointing device that is used to supplement the arrow keys of the keyboard **80** for specifying precise pointings on the graphic display **60**. The keyboard is controlled by a keyboard adapter **82**, including buffer means, in the CPU **10**. Finally, a printer or plotter **89** can be attached to the CPU **10** to generate hardcopy of drawings.

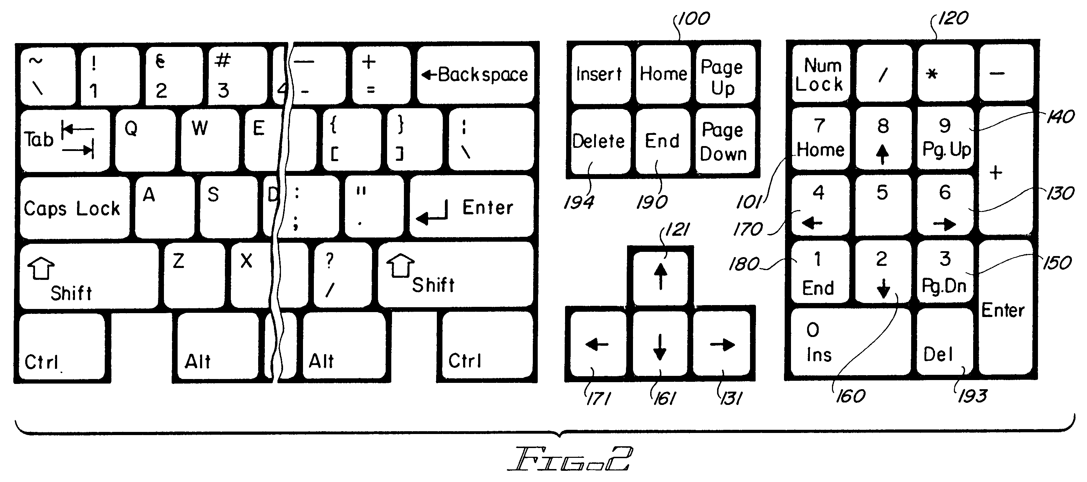

The keyboard **80** depicted in Figure **2** is a standard IBM Enhanced Keyboard which is currently used on IBM PS/2's and has been widely adopted by other personal computer manufacturers. The arrow keys **120, 121; 130, 131; 160, 161; and 170, 171** are used to move the cursor in the direction which they point in the move mode. Other keys are used to control the graphic display in various ways as set forth below.

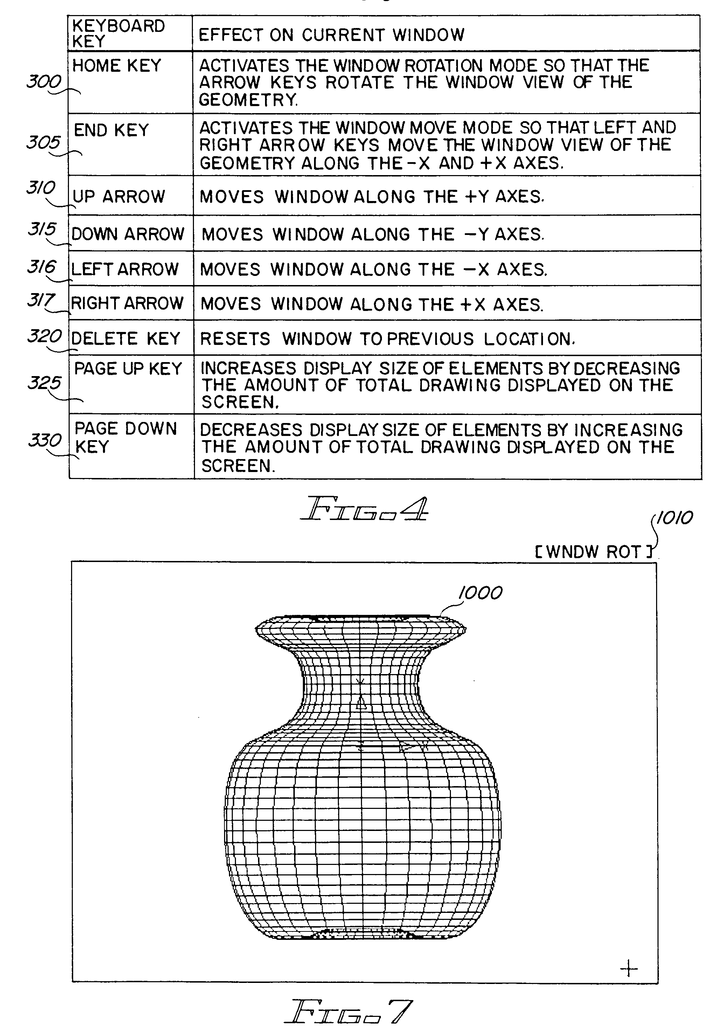

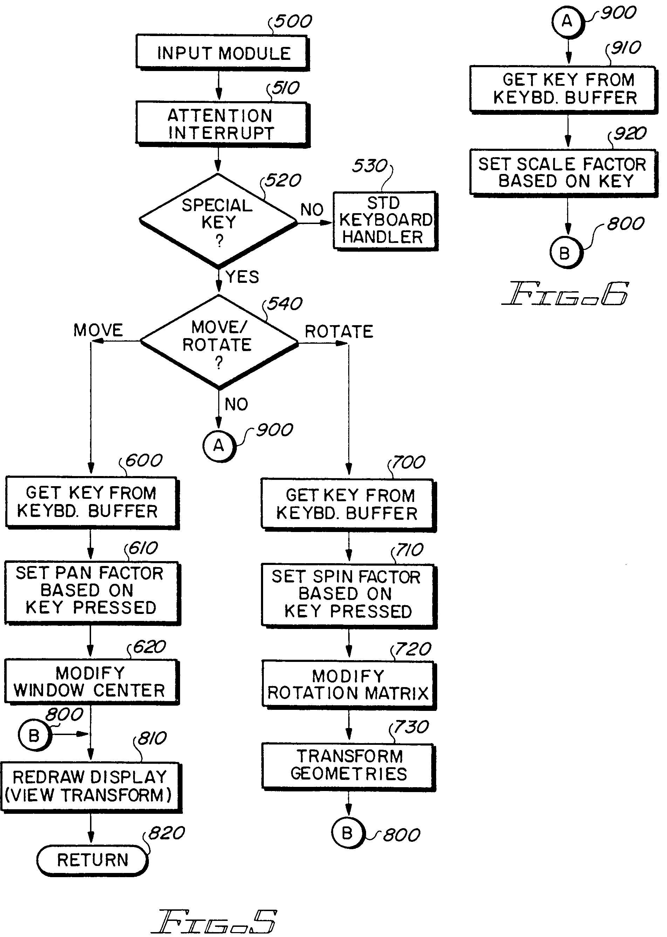

The software used to awake the unique hardware features of this invention resides on the Disk **30** as do the drawings generated by a designer employing the invention. Figure **3** is a block diagram depicting the function keys and their assignments. Of particular interest is label **200** where a description of Function key F4 appears. This function key is used to toggle between two modes affecting the arrow keys shown in Figure **2**. In one mode, the arrow keys work much the way they would in a word processing program; ie., shifting the cursor character one position each time they are pressed. In the alternate mode, the arrow keys perform the functions discussed in Figure **4**. Similarly, the mouse can also be used to move or rotate the object based on the active mode.

Referring to Figures **2** and **4**, the Home Key **300**, in Figure **4** and **100** in the keyboard illustration of Figure **2**, is used to activate a rotation mode to enable the user to rotate a object of interest by pressing the arrow keys. Referring to Figures **2** and **4**, the End Key, **305** in Figure **4** and **190** in the keyboard illustration of Figure **2**, is used to activate a move mode to enable the user to move the object of interest by pressing the arrow keys or moving the mouse.

The functions of the various arrow keys are discussed in Figure **4** at labels **310, 315, 316**, and **317**. It is worth noting that the arrow keys are physically located at two separate areas on the enhanced keyboard. With reference to Figure **2**, both **120** and **121** are UP arrow keys. Thus, when the system is in the move mode, pressing either of these keys will cause a corresponding change in the +Y axis. Similarly, the other arrow keys affect corresponding changes in the +-X & Y axis. The delete keys **193** and **194** in Figure **2** similarly have the same function regardless of which key is selected of resetting the window to the previous location.

The PgUp key **140** of Figure **2** causes an immediate zoom in on the object of interest on the display by decreasing the amount of total drawing that is displayed on the display. Similarly, the PgDn key **150** performs a zoom-out by increasing the amount of total drawing displayed on the display.

As previously discussed, pressing the End key **180** or **190** puts the system into a move mode and the arrow keys are interpreted as immediate instructions to perform a move in the direction the arrow key points. Alternatively, if one of the two Home Keys **100** or **101** is pressed, then the system enters rotate mode and pressing of the arrow keys causes an immediate rotation of the object of interest in the direction that the arrow faces. Thus, if the up arrow key **120** or **121** is pressed, then the object rotates -1 degree on the X axis. Similarly, the left arrow key **170** or **171** would invoke an immediate rotation of -1 degree on the Y axis. The right **130, 131** and down arrow keys **160, 161** invoke immediate rotations of +1 degree on the Y and X axis.

### "C" Program Listing

The keyboard handler code is presented below to illustrate the logic of the preferred embodiment of the invention to one of ordinary skill in the art. Flow diagrams are also included below to further illuminate the logic of the present invention.

```
/***********************************************/
static void keyboard_window( key )
short key;
{
    short item, save_item;
    double save_ang[3], x, y, factor;

    double scale_factor = 0.1;
    double spin_factor = 2.0;
    double pan_factor = 0.1;
```

```
        save_item = FKWN3D.item;


if( key == -7)              /* SPIN */
{     spin = 1;
      msg_key_mode();
}
else if( key == -1 )        /* PAN */
{     spin = 0;
      msg_key_mode();
}
else if(key == -11)                     /* RESET */
{     FKWN3d.item = 8;
      C_wn_setaxi ();
}
else if(key == -3 || key == -9)
{     FKWN3D.item = 6;
      if(key == -9)                     /* SCALE UP */
                {           factor = (1.0 + scale_factor) *
                            WDW3D.wnsiz;
                }
      else
                {           factor = (1.0 - scale_factor) *
                            WDW3D.wnsiz;
                }
      C_wn_setwsz(factor);
      C_wn_fwnssr();
}
else if(        key == -2 || key == -4 ||
                key == -6 || key == -8 )
      { if (spin == 1)               /* 1 spin */
          {         FKWN3D.item = 4;
                    C_ut_dpsto(3, FKWN3D.rotang, save_ang);
                    FKWN3D.rotand[0] = FKWN3D.rotang[1] =
                    FKWN3D.rotang[2] = 0.0;
```

```
if( key == -4 )
{ FKWN3D.rotang[1] = -spin_factor;
   item = 2;
}
else if(key == -6 )
{  FKWN3D.rotang[1] = spin_factor;
     item = 2;
}

else if(key == -8 )
{ FKWN3D.rotang[0] = -spin_factor;
   item = 1;
}
else if( key == -2 )
{  FKWN3D.rotang[0] = spin_factor;
     item = 1;
}
C_wn_xyzrot( item );
C_wn_fwnssr();
C_ut_dpsto(3, save_arg, FKWN3d.rotang);
}
else if(spin == 0)              /* 2=pan */
{         FKWN3D.item = 5;
          x = 0.0;
          y = 0.0;
          if (key == -4) x = pan_factor;
          else if(key == -6) x = -pan_factor;
          else if(key == -8) y = -pan_factor;
          else if (key == -2) y = pan_factor;
          WDW3D.wnxy[0] += x / WDW3d.wnsiz;
          WDW3D.wnxy[1] += y / WDW3D.wnsiz;
          C_wn_fwnssr();
          }
}
FNWN3D.item = save_item;
}
```

## Flow Diagram Description

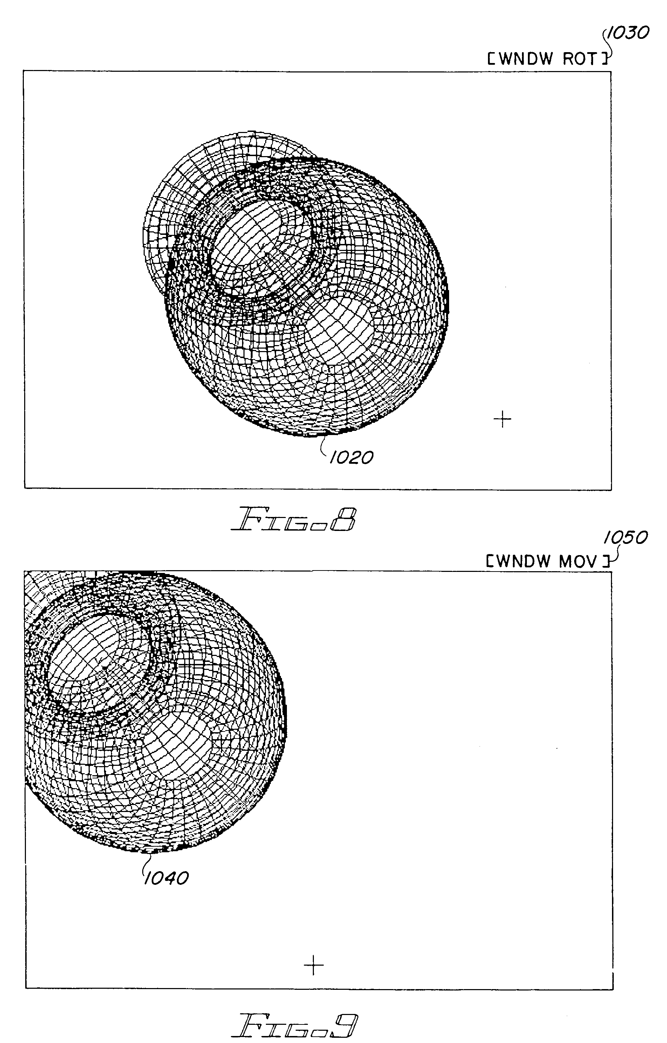

To better understand the logic of the invention, a flow diagram is provided in Figures **5** and **6** that set forth the invention's logic. Referring to Figure **5**, processing begins with a user pressing a key on the keyboard. This generates an interrupt signal that is sent to the input module as shown in function block **500**. Function block

510 handles the attention interrupt and passes control to decision block 520 to determine if one of the ten special keys have been pressed. This is accomplished by comparing the contents of the keyboard buffer with the scan codes of the ten appropriate keys. If the key is not one of the special keys, then control is passed to the standard keyboard handler as shown in function block 530.

Knowing that it is a special key, the keyboard handler can pass control to one of three sets of logic based on the current mode which is set by pressing the END key (MOVE) or the HOME key (ROTATE) and is stored in the random access memory (RAM). If the current mode is MOVE, then control passes to input block 600. If the mode is rotate, then control passes to input block 700. If the mode is not move/rotate, then a zoom operation is processed as indicated by the branch at label 900.

The MOVE operation commences at input block 600 when the key scan code is obtained from the keyboard buffer. Each key has an unique ASCII character associated with it. Based on the code, the panning factor is set. The panning factor is used to determine which way the object should be moved on the display as indicated in function block 610. So, for example, if the down arrow key is pressed, then deltaY is set equal to +.1. If the up arrow key is pressed, then deltaY is set equal to -.1. Further, if the left arrow key is pressed, then deltaX is set equal to -.1, and finally if if the right arrow key is pressed, then deltaX is set equal to +.1.

Then, the window center is modified based in the the deltaX and deltaY values as shown in function block 620. So, for example, when the down arrow is pressed, the window center is shifted by .1 to effectively move the object down on the display. This is accomplished by the following pair of mathematical equations:

window_centerX = deltaX / window scale factor

window_centerY = deltaY / window scale factor

Finally, the display is redrawn (view transform affected) as indicated in function block 810 using the standard graphic tools to display graphic information on a display. When the display is updated, control returns at termination block 820.

The ROTATE operation commences at function block 700 where the key pressed is uniquely determined as in the other operations by querying the keyboard buffer. Then, in function block 710, the spin factor is set based on the particular key that was pressed. For example, if the up arrow key was pressed indicating rotation about the X-axis in a clockwise direction, then deltaX is set equal to +spinfactor (2.0). Similarly, if the down arrow key was pressed, then deltaX is set equal to -spinfactor (-2.0). If the left arrow key was pressed, then deltaY is set equal to -spinfactor (-2.0). If the right arrow was pressed, then deltaY is set equal to +spinfactor (2.0).

Then, the rotation matrix is modified based on the particular arrow key pressed as reflected in deltaX and deltaY and set forth in function block 720. The actual modification is achieved by setting up variables for inclusion in a transformation matrix. The variables are:

Cx = cos(deltaX);

Sx = sin(deltaX);

Cy = cos(deltaY); and

Sy = sin(deltaY).

Next, the geometries are transformed by performing the following matrix transformation:

$$M = \begin{bmatrix} 1 & 0 & 0 \\ 0 & Cx & -Sx \\ 0 & Sx & Cx \end{bmatrix} X \begin{bmatrix} Cy & 0 & -Sy \\ 0 & 1 & 0 \\ Sy & 0 & Cy \end{bmatrix}$$

Finally, the display is updated as discussed above in the Move operation by branching to label 800 and entering the display code. The actual display operation is accomplished by matrix multiplication of the geometry matrix by the matrix M calculated above. So, the operation in mathematical terms is:

[Geometries] [M] = [New Geometries].

The Scale Up and Down operations (Zoom in/out) are performed by branching at label 900 to input block 910 to obtain the value of the key pressed from the keyboard buffer. Then, based on whether PgUp or PgDn was pressed, the window scale is increased by a scalefactor or decreased by a scale factor as reflected in function bloc 920. Finally, control is passed to label 800 for redrawing the display with the new window scalefactor.

Figures 7, 8 and 9 are illustrations of displays generated by a CAD system employing the invention. Figure 7 illustrates an object 1000 in a design system currently in the rotate mode 1010. Figure 8 illustrates an object 1020 that has been rotated while in the rotate mode 1030. Finally, Figure 9 illustrates an object 1040 that has been moved in the move mode 1050. The movements and rotate operations were accomplished by appropriate entries via the arrow keys on the keyboard.

While the invention has been described in terms of a preferred embodiment in a specific system environment, those skilled in the art recognize that the invention can be practiced, with modification, in other and different hardware and software environments within the spirit and scope of the appended claims.

## Claims

1. Apparatus for performing a set of display operations to manipulate information on a display, comprising:
   (a) means for transmitting a control signal to a processor in response to a key depression on a keyboard;
   (b) processor means for receiving the control signal;
   (c) processor means for translating the control signal into a determination that a particular key was pressed;
   (d) processor means for determining that a particular set of display operations are active by querying a memory location; and
   (e) processor means for performing a particular display operation in the particular set of display operations based on the particular key that is pressed and the particular set of display operations that are active.

2. Apparatus as recited in claim 1, further comprising buffering means for storing control signals.

3. Apparatus as recited in claim 1, further comprising mouse handling means for translating mouse movements into keyboard control signals.

4. Apparatus as recited in claim 1, further comprising means for performing rotate display operations.

5. Apparatus as recited in claim 1, further comprising means for moving objects as one of the display operations.

6. Apparatus as recited in claim 1, further comprising means for switching between a rotation mode and move mode.

7. Apparatus as recited in claim 1, further comprising means for adjusting the granularity of the particular display operation.

8. Apparatus as recited in claim 1, further comprising means for zooming in or zooming out the display.

9. A method for performing a set of display operations to manipulate information on a display, comprising the steps of:
   (a) transmitting a control signal to a processor in response to a key depression on a keyboard;
   (b) receiving the control signal;
   (c) translating the control signal into a determination that a particular key was pressed;
   (d) determining that a particular set of display operations are active by querying a memory location; and
   (e) performing a particular display operation in the particular set of display operations based on the particular key that is pressed and the particular set of display operations that are active.

10. A method as recited in claim 9, further comprising the step of storing control signals.

11. A method as recited in claim 9, further comprising the step of translating mouse movements into keyboard control signals.

12. A method as recited in claim 9, further comprising the step of performing rotate display operations.

13. A method as recited in claim 9, further comprising the step of moving objects as one of the display operations.

14. A method as recited in claim 9, further comprising the step of switching between a rotation mode and move mode.

15. A method as recited in claim 9, further comprising the step of adjusting the granularity of the particular display operation.

16. A method as recited in claim 9, further comprising the step of zooming in or zooming out the display.

*Fig.1*

*Fig.3*

| KEYBOARD FUNCTION KEY | FUNCTION |
|---|---|
| F1 | DISPLAYS THE ON-SCREEN FUNCTION KEY ICON FOR FUNCTION SELECTION. PRESS F1 AGAIN TO REMOVE THE DISPLAY. |
| F2 | YN KEY. FUNCTIONS THE SAME AS THE YN (THIRD) MOUSE BUTTON OR THE YN KEY FROM THE OPTIONAL FUNCTION KEY BOX. |
| F3 | SCREEN REDRAW FUNCTION. PRESS F3 ANYTIME YOU WANT TO RESTORE ELEMENT DISPLAY. |
| F4 200 | TOGGLE BETWEEN TWO MODES AFFECTING THE ARROW KEYS. IN CHARACTER EDITING MODE, THE LEFT AND RIGHT ARROW KEYS AFFECT THE CURSOR MOVEMENT ALONG THE CURSOR LINE FOR EDITING PURPOSES. IN THE WINDOW MODE, FOUR ARROW KEYS ALLOW YOU TO ROTATE THE WINDOW FOR BETTER VIEWING PURPOSES. THE HOME KEY ACTIVATES WINDOW MOVE FUNCTIONS AND THE END KEY ACTIVATES WINDOW ROTATE FUNCTIONS. PAGE UP INCREASES DISPLAY SIZE OF ELEMENTS BY DECREASING THE AMOUNT OF TOTAL DRAWING DISPLAYED ON THE SCREEN. PAGE DOWN DECREASES DISPLAY SIZE OF ELEMENTS BY INCREASES THE AMOUNT OF TOTAL DRAWING DISPLAYED ON THE SCREEN. |

Fig-2

EP 0 488 570 A2

| KEYBOARD KEY | EFFECT ON CURRENT WINDOW |
|---|---|
| HOME KEY | ACTIVATES THE WINDOW ROTATION MODE SO THAT THE ARROW KEYS ROTATE THE WINDOW VIEW OF THE GEOMETRY. |
| END KEY | ACTIVATES THE WINDOW MOVE MODE SO THAT LEFT AND RIGHT ARROW KEYS MOVE THE WINDOW VIEW OF THE GEOMETRY ALONG THE −X AND +X AXES. |
| UP ARROW | MOVES WINDOW ALONG THE +Y AXES. |
| DOWN ARROW | MOVES WINDOW ALONG THE −Y AXES. |
| LEFT ARROW | MOVES WINDOW ALONG THE −X AXES. |
| RIGHT ARROW | MOVES WINDOW ALONG THE +X AXES. |
| DELETE KEY | RESETS WINDOW TO PREVIOUS LOCATION. |
| PAGE UP KEY | INCREASES DISPLAY SIZE OF ELEMENTS BY DECREASING THE AMOUNT OF TOTAL DRAWING DISPLAYED ON THE SCREEN. |
| PAGE DOWN KEY | DECREASES DISPLAY SIZE OF ELEMENTS BY INCREASING THE AMOUNT OF TOTAL DRAWING DISPLAYED ON THE SCREEN. |

*Fig. 4*

[ WNDW ROT ] 1010

*Fig. 7*

*Fig. 5*

*Fig. 6*

[WNDW ROT] _1030_

_1020_

Fig. 8

[WNDW MOV] _1050_

_1040_

Fig. 9